Europäisches Patentamt

European Patent Office

Office européen des brevets

(11) Veröffentlichungsnummer: **0 313 544**
**A1**

## (12) EUROPÄISCHE PATENTANMELDUNG

(21) Anmeldenummer: 88890213.7

(22) Anmeldetag: 22.08.88

(51) Int. Cl.⁴: **B 23 D 19/06**

(30) Priorität: 25.09.87 AT 2432/87

(43) Veröffentlichungstag der Anmeldung:
26.04.89  Patentblatt  89/17

(84) Benannte Vertragsstaaten:
CH DE FR IT LI SE

(71) Anmelder: BÖHLER Gesellschaft m.b.H.
Elisabethstrasse 12
A-1010 Wien  (AT)

(72) Erfinder: Haider, Alfred
Ybbsitzerstrasse 142
A-3340 Waidhofen  (AT)

Hönigl, Johann
Pfarrerbodensiedlung 12
A-3340 Waidhofen  (AT)

(54) Bandführung an Rundmessern.

(57) Die Erfindung betrifft eine Bandführung an Rundmessern zur Herstellung von Stahlbändern aus Flächenmaterial. Hierbei wird eine Ausbildung einer Bandführung an Rundmessern angestrebt, die eine glatte, hart Oberfläche an der Berührungsstelle aufweist und trotzdem elastisch ist, um den Austrag einwandfrei mit hoher Standzeit des Werkzeuges bewerkstelligen zu können. Dies wird dadurch erreicht, daß die Halteeinrichtung aus einem Druckring (5, 9, 10) besteht, der gleich oder größer dem Durchmesser der Schneidscheiben (1) ist und durch ein an sich bekanntes elastisches Element (6, 7, 11) in radialer Richtung beweglich ist und die Überlappung der Schneidkanten der Grundscheibe (2) durch Anpreßdruck entsteht, wobei der Druckring (5) als Distanzring zwischen den Schneidscheiben (1) dient und der Breite der Grundscheibe (2) entspricht.

Fig. 1

EP 0 313 544 A1

**Beschreibung**

## Bandführung an Rundmessern

Die Erfindung betrifft eine Bandführung an Rundmessern, insbesondere zur Herstellung von Stahlbändern aus Flächenmaterial, bestehend aus auf freilaufenden oder angetriebenen Wellen befestigten Messerscheiben, wobei eine mit Schneidkanten versehene Grundscheibe mit zwei diese Kanten überlappend und durch Distanzscheiben lagefixiert befestigten Schneidscheiben zusammenwirkt und einer Einrichtung zum Geradhalten des Schnittbandes am Austrag.

Eine solche Bandführung dient dazu, das Stahlband so aus den Schneidscheiben zu führen, daß es durch den beim Schneidvorgang entstehenden Schnittgrat nicht eingeklemmt wird. Die Folge wäre ein unkontrollierter Austrag des Schnittbandes.

Bei der Herstellung von Stahlbändern durch Rundmesser ist eine Reihe von Methoden bekannt, um ein gerades und glattes Stahlband herstellen zu können. Hiezu bedient man sich in althergebrachter Weise mit Holzführungen, Keilen und dgl. mehr. Diese Herstellungsweise bringt zwar gute Ergebnisse, hängt aber sehr stark von der Fertigkeit des Einstellers und vom Zustand der Holzführungen ab. Man ist deshalb dazu übergegangen, einen Auswerfer vorzusehen, der selbsttätig einen brauchbaren Austrag besorgt. Dabei ist zwischen den Schneidscheiben ein aus elastischem Material bestehender Teil eingefügt, vorzugsweise ein Gummiring, der annähernd den gleichen Durchmesser wie die Schneidscheiben hat und geringfügig durch die Grundscheibe und das dazwischenliegende Schnittband an der Berührungsstelle flachgedrückt ist. Sobald der Anpreßdruck nachläßt, dehnt sich in radialer Richtung der Gummiring wieder aus und drückt somit das Schnittband aus der Umklammerung der Schneidscheiben heraus.

Nachteilig ist jedoch bei einem solchen Auswerfer, daß der Erfolg sehr stark von der Materialbeschaffenheit des Auswerfers, d.h. des Gummiringes abhängt und nach einer gewissen Laufzeit sich wieder Unregelmäßigkeiten am Schnittband ergeben. Man muß deshalb öfters, bedingt durch die kurzen Standzeiten des Gummiringes, einen Austausch vornehmen oder erhöhten Ausschuß in Kauf nehmen.

Ausgehend von diesem Stand der Technik lag der Erfindung die Aufgabe zugrunde, eine Bandführung an Rundmessern zu schaffen, die eine glatte, harte Oberfläche an der Berührungsstelle aufweist und trotzdem elastisch ist, um den Austrag einwandfrei mit hoher Standzeit des Werkzeuges bewerkstelligen zu können. Erfindungsgemäß wird das Ziel dadurch erreicht, daß die Halteeinrichtung aus einem als Stahlring ausgebildeten Druckring besteht, der durch ein elastisches Element in radialer Richtung beweglich ist, wobei gegebenenfalls der Druckring als Distanzscheibe zwischen den Schneidscheiben dient und der Breite der Grundscheibe entspricht. Damit wird erreicht, daß das Schnittband infolge des Druckringes eine glatte Oberfläche beibehält und darüberhinaus eine präzise Schnittkante entsteht.

Wenn die Bandführung einen Druckring enthält, der gleich oder größer dem Durchmesser der Schneidscheiben ist und die Überlappung der Schneidkanten der Grundscheibe durch Anpreßdruck entsteht, ist auf einfache Weise die günstigste Messerstellung gegeben.

Bei einer anderen Ausführungsform ist es günstig, wenn ein weiterer Distanzring vorgesehen ist, der zur Aufnahme der elastischen Elemente dient. Damit können auch lose Gummiteile eingefügt werden.

Es ist von Vorteil, wenn zwischen Distanzring und Druckring Gummirollen od. dgl. Kunststoffhohlrollen angeordnet sind, da somit eine progressive Federung erzielt wird.

Um eine einfache Montage der elastischen Elemente zu ermöglichen, ist es von Vorteil, wenn zwischen Distanzring und Druckring ein Endlosschlauch oder Schlauchsegmente angeordnet sind. Damit ist die Gewähr einer raschen Montage gegeben. Eine einfache Lagefixierung wird erreicht, wenn der Endlosschlauch oder die Schlauchsegmente am Distanz- und Druckring in Rillen eingelegt sind.

Bei der Herstellung von Bändern in größerer Stückzahl kann man mehrere Einheiten der Schneidscheiben bzw. Grundscheiben auf den Wellen anordnen, um eine kostengünstige Herstellung zu garantieren.

Anhand eines Ausführungsbeispieles sei die Erfindung näher erläutert. Es zeigen:

Fig. 1 Schnitt der Schneidwerkzeuge mit Gummischeibe und Druckring

Fig. 2 Seitenansicht

Fig. 3 Schneidwerkzeug mit Gummirollen

Fig. 4 Seitenansicht

Fig. 5 Schneidwerkzeug mit Gummischlauch

Fig. 6 Seitenansicht.

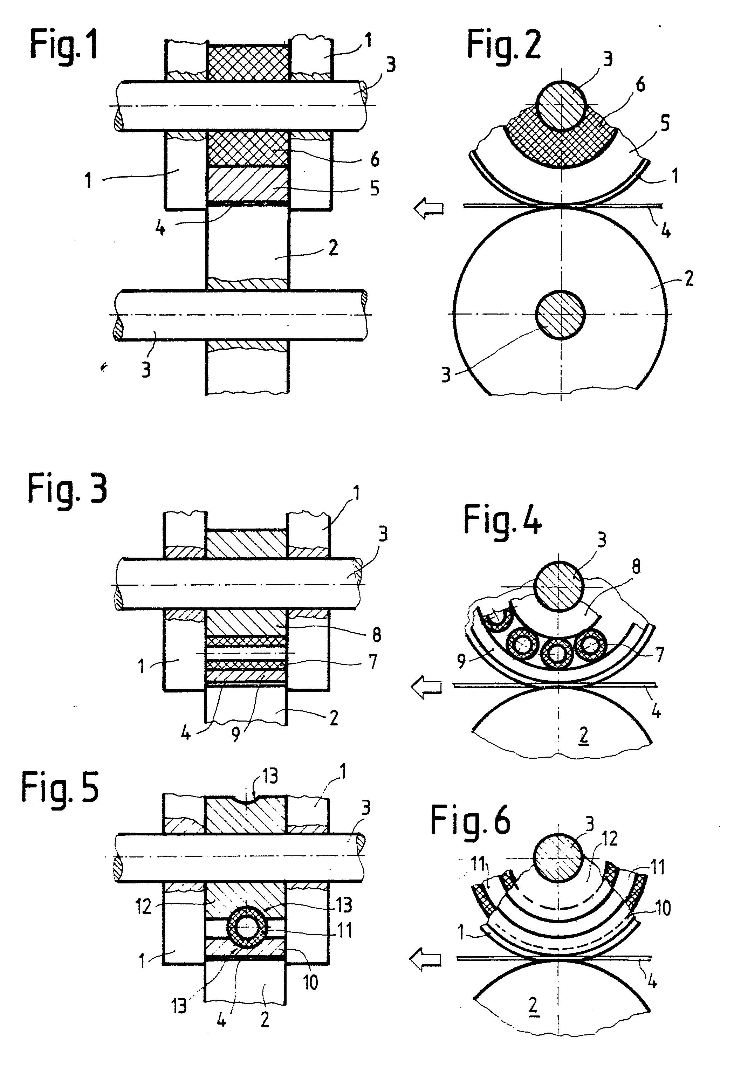

Die Fig. 1 zeigt einen Schnitt durch ein Schneidwerkzeug. In einem gewissen Abstand zueinander sind zwei Schneidscheiben 1 auf einer freilaufenden oder angetriebenen Welle 3 befestigt, wobei die inneren Schneidkanten gerade die Schneidkanten der Grundscheibe 2 überlappend berühren. Die Grundscheibe 2 ist auf der unteren Welle 3 befestigt und gegensinnig zur oberen Welle 3 angetrieben. Zwischen den beiden Schneidscheiben 2 ist das Schnittband 4 geführt, das auf dem Druckring 5 angedrückt wird. Ein Gummiring 6 ist zwischen Welle 3 und Druckring 5 und dient als elastisches Element.

Fig. 2 zeigt in Seitenansicht die Schneid- und Grundscheibe 1, 2, wobei gemäß Pfeil das Schnittband 4 hindurchgeführt wird. Die Achsabstände der beiden Wellen 3 sind so gewählt, daß die Grundscheibe 2 den Druckring 5 soweit an der Berührungsstelle in den Gummiring 6 drückt, daß beide Schneidkanten überlappt sind. Der Druckring 5 dient auch als Distanzring für die beiden Schneidscheiben 1, während der Gummiring 6 den Raum zwischen Druckring 5 und Welle 3 voll ausfüllt.

Fig. 3 zeigt eine andere Ausbildungsvariante des elastischen Elementes. Dies besteht aus einzelnen Gummirollen 7, die zwischen einem Distanzring 8 und Druckring 9 ähnlich einem Kugellager eingefügt sind. Dies geht auch deutlich aus Fig. 4 durch eine Seitenansicht hervor. Wesentlich ist, daß der Druckring 9 im Bereich des Schneidvorganges aus der Mittellage gedrückt wird und einen gewissen Anpreßdruck auf das Schnittband 4 ausübt.

Schließlich ist nach Fig. 5 und 6 eine Variante zu ersehen, bei der der Distanzring 12 und der Druckring 10 an der innen zugewandten Mantelfläche eine Rille 13 enthält. Hier kann nun ein Gummischlauch 11 als einstückiges Federteil oder auch aus Schlauchsegmenten zusammengefügtes Teil eingesetzt werden.

Für stärkere Schnittbänder werden vorteilhafterweise die Schneidkanten der Schneidscheiben bzw. der Grundscheibe überlappungsfrei eingestellt. Dies ergibt eine gute Schnittkante und hinterläßt einen sehr geringen Schneidgrat.

Durch diese besondere Ausbildung einer Bandführung wird erreicht, daß das Schnittband gerade aus dem Schneidwerkzeug gelangt, wobei besonders die Tatsache hervorzuheben ist, daß hohe Standzeiten das Werkzeug kennzeichnet. Oberflächenscheuerung tritt infolge rollender Reibung nicht auf und auf die Fertigkeit des Einstellers braucht nicht so sehr geachtet zu werden. Das Schnittband ist von gleichmäßiger Güte, größere Ausschußquoten werden wirksam vermieden.

**Patentansprüche**

1. Bandführung an Rundmessern, insbesondere zur Herstellung von Stahlbändern aus Flächenmaterial, bestehend aus auf freilaufenden oder angetriebenen Wellen befestigten Messerscheiben, wobei eine mit Schneidkanten versehene Grundscheibe mit zwei diese Kanten überlappend und durch Distanzscheiben lagefixiert befestigten Schneidscheiben zusammenwirkt und einer Einrichtung zum Geradhalten des Schnittbandes am Austrag, dadurch gekennzeichnet, daß die Halteeinrichtung aus einem als Stahlring ausgebildeten Druckring (5,9,10) besteht, der durch ein elastisches Element (6,7,11) in radialer Richtung beweglich ist, wobei gegebenenfalls der Druckring (5) als Distanzscheibe zwischen den Schneidscheiben (1) dient und der Breite der Grundscheibe (2) entspricht.

2. Bandführung nach Anspruch 1, dadurch gekennzeichnet, daß der Druckring (5,9,10) der gleich oder größer dem Durchmesser der Schneidscheiben (1) ist und die Überlappung der Schneidkanten der Grundscheibe (2) durch Anpreßdruck entsteht.

3. Bandführung nach Anspruch 1 und 2, dadurch gekennzeichnet, daß ein weiterer Distanzring (8,12) vorgesehen ist, der zur Aufnahme der elastischen Elemente (7,11) dient.

4. Bandführung nach Anspruch 1 bis 3, dadurch gekennzeichnet, daß zwischen Distanzring (8) und Druckring (9) Gummirollen (7) od. dgl. Kunststoffhohlrollen angeordnet sind.

5. Bandführung nach Anspruch 1 bis 3, dadurch gekennzeichnet, daß zwischen Distanzring (12) und Druckring (10) ein Endlosschlauch (11) oder Schlauchsegmente angeordnet sind.

6. Bandführung nach Anspruch 1 bis 3 und 5, dadurch gekennzeichnet, daß der Endlosschlauch (11) am Distanzring (12) und Druckring (10) durch Rillen (13) lagefixiert ist.

7. Bandführung nach einem der Ansprüche 1 bis 6, dadurch gekennzeichnet, daß mehrere Einheiten der Schneidscheiben (1) bzw. Grundscheiben (2) auf den Wellen (3) angeordnet sind.

Fig.1  Fig.2  Fig.3  Fig.4  Fig.5  Fig.6

Europäisches Patentamt

**EUROPÄISCHER RECHERCHENBERICHT**

Nummer der Anmeldung

EP 88 89 0213

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | GB-A-1 391 566 (FROHLING)<br>* Ansprüche 1, 2, 4; Seite 2, Zeilen 11-50; Figuren 1, 2 *<br>--- | 1, 2, 7 | B 23 D 19/06 |
| A | DE-C-3 510 847 (JUENGEL)<br>* Ansprüche 1,2, 6; Seite 3, Zeilen 1-4; Figuren 1-3 *<br>--- | 1, 7 | |
| A | US-A-2 506 343 (CASAGRANDE)<br>* Anspruch 1; Spalte 2, Zeile 47 - Spalte 3, Zeile 39; Figuren 4, 5 *<br>--- | 1, 3, 7 | |
| A | GB-A-2 108 089 (METAL BOX)<br>* Zusammenfassung; Figur 2 *<br>----- | 5,6 | |

RECHERCHIERTE SACHGEBIETE (Int. Cl.4)

B 23 D 19/00
B 23 D 35/00
B 26 D 1/24

Der vorliegende Recherchenbericht wurde für alle Patentansprüche erstellt

| Recherchenort | Abschlußdatum der Recherche | Prüfer |
|---|---|---|
| BERLIN | 20-12-1988 | MARTIN A E W |